# EUROPÄISCHE PATENTSCHRIFT

(11) **EP 3 068 606 B1**
(45) Veröffentlichungstag und Bekanntmachung des Hinweises auf die Patenterteilung: **15.04.2020**
(21) Anmeldenummer: 14802337.7
(22) Anmeldetag: 07.11.2014
(51) Int. Cl.: B29C 64/35, B29C 64/379, B22F 3/105, B29C 64/153

(54) **VORRICHTUNG UND VERFAHREN ZUM SCHICHTWEISEN HERSTELLEN EINES DREIDIMENSIONALEN OBJEKTS SOWIE ZUM AUSPACKEN DES FERTIGGESTELLTEN OBJEKTS**
DEVICE AND METHOD FOR PRODUCING A THREE-DIMENSIONAL OBJECT IN LAYERS AND FOR UNPACKING THE FINISHED OBJECT
DISPOSITIF ET PROCÉDÉ PERMETTANT DE FABRIQUER PAR COUCHES UN OBJET TRIDIMENSIONNEL AINSI QUE D'EXTRAIRE L'OBJET FINI

(30) Priorität: 15.11.2013 DE 102013223407
(43) Veröffentlichungstag der Anmeldung: 21.09.2016
(73) Patentinhaber: EOS GmbH Electro Optical Systems, 82152 Krailling (DE)
(72) Erfinder: KERL, Franz-Josef, 84036 Kumhausen (DE); FEY, Georg, 80336 München (DE)
(74) Vertreter: Prüfer & Partner mbB Patentanwälte · Rechtsanwälte
(86) Internationale Anmeldenummer: PCT/EP2014/074017
(87) Internationale Veröffentlichungsnummer: WO 2015/071184

(56) Entgegenhaltungen:
- DE-A1- 3 010 964
- DE-A1- 19 937 260
- DE-A1-102007 014 968
- DE-A1-102011 002 954
- US-A- 5 569 431
- US-A1- 2009 283 119

## Beschreibung

Die vorliegende Erfindung bezieht sich auf eine Vorrichtung und ein Verfahren zum schichtweisen Herstellen eines dreidimensionalen Objekts durch schichtweises Verfestigen von Aufbaumaterial an den dem Querschnitt des herzustellenden Objektes in der jeweiligen Schicht entsprechenden Stellen durch Energieeinbringung und zum Auspacken des fertiggestellten Objekts aus dem es umgebenden unverfestigt gebliebenen Pulver.

Ein Verfahren zum schichtweisen Herstellen eines dreidimensionalen Objekts, das unter dem Namen "Selektives Lasersintern" bekannt ist, sowie eine zugehörige Vorrichtung zur Durchführung des Verfahrens sind beispielsweise in der DE 10 2005 024 790 A1 beschrieben.

WO 01/10631 beschreibt eine Vorrichtung und ein Verfahren zum Auspacken eines fertiggestellten Objekts aus dem es umgebenden, unverfestigt gebliebenen Pulver. Nach der Fertigstellung des Objekts wird der Behälter, in dem das Objekt fertiggestellt wurde, aus der Prozesskammer entnommen und in eine Auspackstation verbracht. In einer Ausführungsform enthält die Auspackstation eine Druckluftquelle, aus der ein Luftstrom tangential über die Oberseite des Behälters streicht. Durch Bewegen des Trägers, auf dem das Objekt aufgebaut ist, in dem Behälter in Richtung zu der Oberseite des Behälters hin wird das unverfestigt gebliebene Pulver allmählich über den Behälterrand hinausgedrückt und durch den Luftstrom von dem fertiggestellten Objekt abgeblasen. Dabei wird gleichzeitig das Objekt gekühlt. In einer anderen Ausführungform wird der Behälter um einen vorbestimmten Winkel gekippt. Durch Bewegen des Trägers in Richtung zur Oberseite des Behälters hin wird das unverfestigt gebliebene Pulver allmählich über den Behälterrand hinausgedrückt und rieselt seitlich in einen Auffangbehälter.

Bei dieser Auspackvorrichtung muss ein eigener Antrieb zum Bewegen des Trägers bereitgestellt werden, wodurch die Vorrichtung komplex und groß wird. Außerdem können Objekte mit Hohlräumen mit den dort beschriebenen Verfahren nicht vollständig von unverfestigt gebliebenem Pulver befreit werden.

DE 10 2011 002 954 A1 beschreibt ein Verfahren und eine Vorrichtung zum Reinigen von Bauteilen, insbesondere von im Sinterverfahren hergestellten Bauteilen mit einer prismenförmigen Folieneinrichtung, die eine axiale Richtung und eine radiale Richtung aufweist, um ihre Längsachse drehbar mit der Vorrichtung in Verbindung steht und in radialer Richtung von einer Ummantelung begrenzt wird, wobei in der Ummantelung eine Mehrzahl von Öffnungen angeordnet sind, und einer Zuführeinrichtung, mit der die Bauteile durch die Einlassöffnung in einen Innenbereich der Filtereinrichtung einbringbar sind.

US 2009/0283119 A1 beschreibt ein Nachverarbeitungssystem für die Reinigung und / oder Aushärtung eines festen Teils, das durch Freiform-Herstellung hergestellt wurde. Das Nachverarbeitungssystem umfasst ein Gehäuse, eine Teilhaltevorrichtung zum Halten des Teil innerhalb des Gehäuses und eine aktinische Strahlungsquelle zum Aushärten des Teils mit aktinischer Strahlung. Das System umfasst auch eine Fluidzirkulationsvorrichtung, die daran angepasst ist, das das Teil einer Reinigungsflüssigkeit auszusetzen und / oder es dem Reinigungsfluid zu ermöglichen, aktinische Strahlung zu absorbieren, um eine Filterung entfernten Baumaterials zu ermöglichen, um dadurch einen längeren Gebrauch der Reinigungsflüssigkeit zu ermöglichen. Bestimmte Systeme umfassen einen ersten Drehabschnitt, der das gehaltene Teil um eine erste Achse drehen kann, und weitere Systeme umfassen einen zweiten Drehabschnitt, der den das gehaltene Teil um eine zweite Achse drehen kann.

Die Aufgabe der vorliegenden Erfindung besteht darin, eine verbesserte Vorrichtung und ein verbessertes Verfahren zum Auspacken eines Objekts, das durch schichtweises Verfestigen von pulverförmigem Ausgangsmaterial hergestellt wurde, aus dem es umgebenden, unverfestigt gebliebenen Pulver bereitzustellen.

Die Aufgabe wird gelöst durch eine Vorrichtung gemäß Anspruch 1, ein Verfahren gemäß Anspruch 6 oder 14 und einer Verwendung einer Vorrichtung gemäß Anspruch 15. Weiterbildungen der Erfindung sind jeweils in den Unteransprüchen angegeben. Die Vorrichtung zum Herstellen eines dreidimensionalen Objekts durch schichtweises Aufbringen und selektives Verfestigen eines pulverförmigen Aufbaumaterials enthält eine Prozesskammer zum schichtweisen Herstellen des Objekts in einem Wechsel-behälter und/oder auf einer Bauplattform und eine Vorrichtung zum Auspacken eines in einem Wechselbehälter und/oder auf einer Bauplattform durch schichtweises Aufbringen und selektives Verfestigen eines pulverförmigen Aufbaumaterials hergestellten dreidimensionalen Objekts aus dem es umgebenden unverfestigt gebliebenen Pulver enthält eine drehbar angeordnete Drehvorrichtung, die in der Lage ist, den Wechselbehälter und/oder die Bauplattform aufzunehmen und um einen Winkel von mindestens 90° aus der aufrechten Position heraus zu drehen.

Bei der Vorrichtung zum Auspacken verläuft vorzugsweise die Drehachse, um die die Drehvorrichtung drehbar ist, um den Wechselbehälter und/oder die Bauplattform aus der aufrechten Position heraus zu drehen, horizontal.

Die Vorrichtung zum Auspacken enthält vorzugsweise weiter eine Einrichtung zum Übertragen einer Vibration und/oder eines Klopfens auf das Objekt.

Die Vorrichtung zum Auspacken enthält vorzugsweise weiter einen Deckel zum Verschließen des Wechselbehälters und/oder einen Auffangbehälter für das unverfestigt gebliebene Pulver. Bei der Vorrichtung zum Auspacken ist vorzugsweise der Auffangbehälter so ausgebildet, dass er so an den den Wechselbehälter verschließbaren Deckel andockbar ist, dass ein gasdichter Innenraum entsteht.

Bei der Vorrichtung zum Auspacken verläuft vorzugsweise die Drehachse, um die die Drehvorrichtung drehbar ist, um den Wechselbehälter aus seiner aufrechten Position heraus zu drehen, durch den zum Aufnehmen des Wechselbehälters bestimmten Bereich der Drehvorrichtung.

Bei der Vorrichtung zum Auspacken ist vorzugsweise Drehvorrichtung so ausgebildet, dass der Wechselbehälter und/oder die Bauplattform um mehr als eine Drehachse drehbar ist.

Bei der Vorrichtung zum Herstellen eines dreidimensionalen Objekts durch schichtweises Aufbringen und selektives Verfestigen eines pulverförmigen Aufbaumaterials ist vorzugsweise die Auspackvorrichtung außerhalb der Prozesskammer angeordnet.

Bei der Vorrichtung ist vorzugsweise die Auspackvorrichtung innerhalb der Prozesskammer so angeordnet, dass der Wechselbehälter und/oder die Bauplattform bereits beim Herstellen des Objekts in der Drehvorrichtung aufgenommen ist.

Das Verfahren zum Befreien eines in einem Wechselbehälter und/oder auf einer Bauplattform durch schichtweises Aufbringen und selektives Verfestigen eines pulverförmigen Aufbaumaterials hergestellten dreidimensionalen Objekts von unverfestigt gebliebenem Pulver enthält die Schritte Anbringen der Bauplattform an einer Drehvorrichtung und Drehen des Wechselbehälters und/oder der Bauplattform um einen Winkel von mindestens 90° aus der aufrechten Position heraus.

Das Verfahren enthält vorzugsweise weiter einen Schritt des Übertragens einer Vibration und/oder eines Klopfens auf das Objekt.

Bei dem Verfahren werden vorzugsweise Parameter für die Vibration und/oder das Klopfen aus Geometriedaten des dreidimensionalen Objekts und/oder Prozessparametern ermittelt und die Auspackvorrichtung gesteuert, die Vibration und/oder das Klopfen mit den ermittelten Parametern durchzuführen.

Bei dem Verfahren erfolgt vorzugsweise die Ermittlung der Parameter computergestützt über eine Software und wird vorzugsweise die Auspackvorrichtung durch die Software gesteuert, die Vibration und/oder das Klopfen mit den ermittelten Parametern durchzuführen.

Bei dem Verfahren sind vorzugsweise die Parameter für die Vibration gewählt aus Frequenz und/oder Richtung und/oder Amplitude und/oder Dauer und/oder Impulsform und/oder die Parameter für das Klopfen gewählt aus Stärke und/oder Richtung und/oder dem zeitlichen Abstand der einzelnen Stöße.

Das Verfahren enthält vorzugsweise vor dem Anbringen des Wechselbehälters an der Drehvorrichtung das Verschließen des Wechselbehälters mit einem Deckel, der eine verschließbare Auslassöffnung aufweist, wobei die Auslassöffnung geöffnet wird, nachdem die Drehvorrichtung gedreht wurde.

Das Verfahren enthält vorzugsweise vor dem Öffnen der Auslassöffnung einen Schritt des Andockens der Auslassöffnung des Deckels an eine Auffangöffnung eines Auffangbehälters zum Bilden eines gasdichten Innenraums.

Bei dem Verfahren wird vorzugsweise der durch den mit dem Deckel verschlossenen Wechselbehälter und den Auffangbehälter gebildeter Innenraum mit Schutzgas gefüllt.

Bei dem Verfahren wird vorzugsweise der Wechselbehälter um eine Drehachse gedreht, die durch den Wechselbehälter hindurch verläuft.

Bei dem Verfahren wird vorzugsweise der Wechselbehälter und/oder die Bauplattform um mehr als eine Drehachse gedreht.

Bei dem Verfahren wird vorzugsweise ein Winkel und/oder eine zeitliche Abfolge von Winkelstellungen aus Geometriedaten des dreidimensionalen Objekts ermittelt und die Drehvorrichtung gesteuert, die Drehung des Wechselbehälters und/oder der Bauplattform mit dem ermittelten ein Winkel und/oder der ermittelten zeitlichen Abfolge von Winkelstellungen durchzuführen.

Bei dem Verfahren erfolgt vorzugsweise die Ermittlung des Winkels und/oder der zeitlichen Abfolge von Winkelstellungen computergestützt über eine Software und die Drehvorrichtung wird durch die Software gesteuert.

Das Verfahren zum Herstellen eines dreidimensionalen Objekts durch schichtweises Aufbringen und selektives Verfestigen eines pulverförmigen Aufbaumaterials enthält die Schritte Aufbauen des Objekts in einem Wechselbehälter und/oder auf einer Bauplattform und Entfernen unverfestigt gebliebenen Pulvers von dem Objekt mit einem Verfahren, wie es vorstehend beschrieben ist.

Bei dem Verfahren ist vorzugsweise der Wechselbehälter und/oder die Bauplattform bereits beim Herstellen des Objekts in der Drehvorrichtung aufgenommen.

Durch das Drehen des in dem Drehrahmen aufgenommenen Wechselbehälters um mindestens 90°aus seiner aufrechten Position heraus wird erreicht, dass das unverfestigt gebliebene Pulver vollständig aus dem Wechselbehälter bzw. aus Hohlräumen des hergestellten Objekts herausrieseln kann. Vorzugsweise wird dieses Herausrieseln durch Aufbringen einer Vibration bzw. eines Klopfens unterstützt. Der gesamte Vorgang kann unter einer Schutzgasatmosphäre durchgeführt werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen der vorliegenden Erfindung geeignet ist.
- Fig. 2: ist eine schematische perspektivische Ansicht einer Auspackstation der in Fig. 1 gezeigten Vorrichtung.
- Fig. 3: ist eine schematische perspektivische Ansicht der Auspackstation von Fig. 2 mit eingesetztem Wechselbehälter.
- Fig. 4: ist eine schematische perspektivische Ansicht der Auspackstation von Fig. 3 in einem um 90° gedrehten Zustand.
- Fig. 5: ist eine schematische perspektivische Ansicht der Auspackstation von Fig. 3 in einem um 180° gedrehten Zustand.
- Fig. 6: ist eine schematische perspektivische Ansicht der Auspackstation von Fig. 3 in einem um 180° gedrehten Zustand, wobei ein Behälterdeckel an einen Auffangbehälter angedockt ist.
- Fig. 7: zeigt schematisch Geometrien hergestellter Objekte mit Innenkanälen.

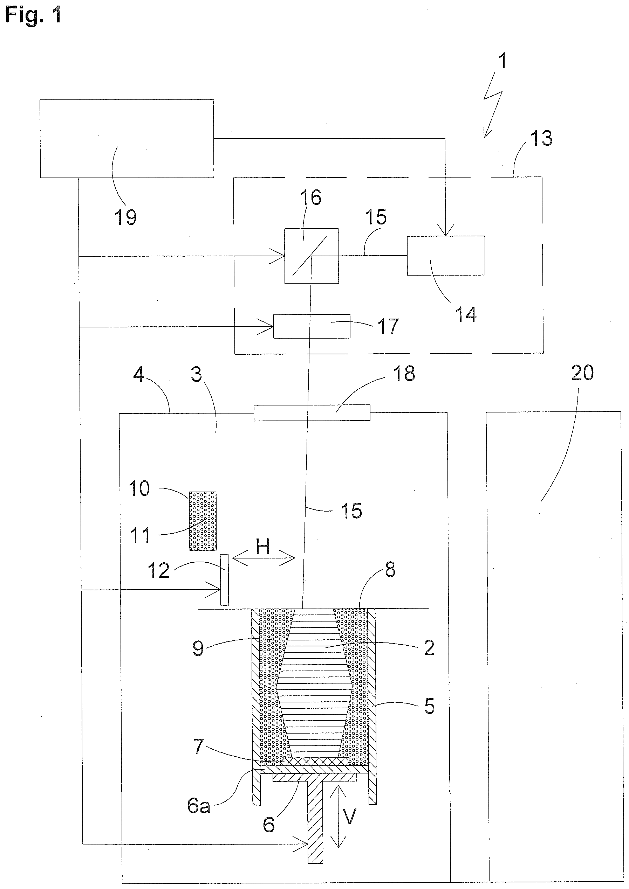

Im Folgenden wird mit Bezug auf Fig. 1 ein Ausführungsbeispiel einer Vorrichtung beschrieben, die zur Durchführung der vorliegenden Erfindung geeignet ist. Die in Fig. 1 dargestellte Vorrichtung ist eine Lasersinter- oder Laserschmelzvorrichtung 1. Zum Aufbauen des Objekts 2 enthält sie eine Prozesskammer 3 mit einer Kammerwandung 4.

In der Prozesskammer 3 ist ein nach oben offener Behälter 5 angeordnet, der als Wechselbehälter ausgebildet ist, was bedeutet, dass er der Prozesskammer 3 entnommen und wieder in sie eingesetzt werden kann. In dem Behälter 5 ist ein in einer vertikalen Richtung V bewegbarer Träger 6 angeordnet, an dem eine Grundplatte 6a angebracht ist, die den Wechselbehälter nach unten abschließt und damit dessen Boden bildet. Die Grundplatte 6a kann eine getrennt von dem Träger 6 gebildete Platte sein, die an dem Träger 6 befestigt ist oder sie kann integral mit dem Träger 6 gebildet sein. Je nach verwendetem Prozess kann auf der Grundplatte 6a noch eine Bauplattform 7 angebracht sein, auf der das Objekt 2 aufgebaut wird. Das Objekt 2 kann aber auch auf der Grundplatte 6a aufgebaut werden, die dann selber als Bauplattform dient.

In Fig. 1 ist das in dem Behälter 5 auf der Bauplattform 7 zu bildende Objekt 2 unterhalb einer Arbeitsebene 8 in einem Zwischenzustand dargestellt mit mehreren verfestigten Schichten, umgeben von unverfestigt gebliebenem Aufbaumaterial 9. Weiter sind in der Prozesskammer 3 ein Vorratsbehälter 10 für ein durch elektromagnetische Strahlung verfestigbares pulverförmiges Aufbaumaterial 11 und ein in einer horizontalen Richtung H bewegbarer Beschichter 12 zum Aufbringen des Aufbaumaterials 11 auf die Arbeitsebene 8 angeordnet.

Die Lasersintervorrichtung 1 enthält ferner eine Belichtungsvorrichtung 13 mit einem Laser 14, der einen Laserstrahl 15 erzeugt, der über eine Umlenkvorrichtung 16 umgelenkt und durch eine Fokussiervorrichtung 17 über ein Einkoppelfenster 18 in der Wandung der Prozesskammer 3 auf die Arbeitsebene 8 fokussiert wird.

Weiter enthält die Lasersintervorrichtung 1 eine Steuereinheit 19, über die die einzelnen Bestandteile der Vorrichtung in koordinierter Weise zum Durchführen des Bauprozesses gesteuert werden. Die Steuereinheit kann eine CPU enthalten, deren Betrieb durch ein Computerprogramm (Software) gesteuert wird.

Schließlich enthält die Lasersintervorrichtung 1 eine Auspackstation 20 zum Auspacken des Objekts 2 aus dem es umgebenden unverfestigt gebliebenen Pulver 9.

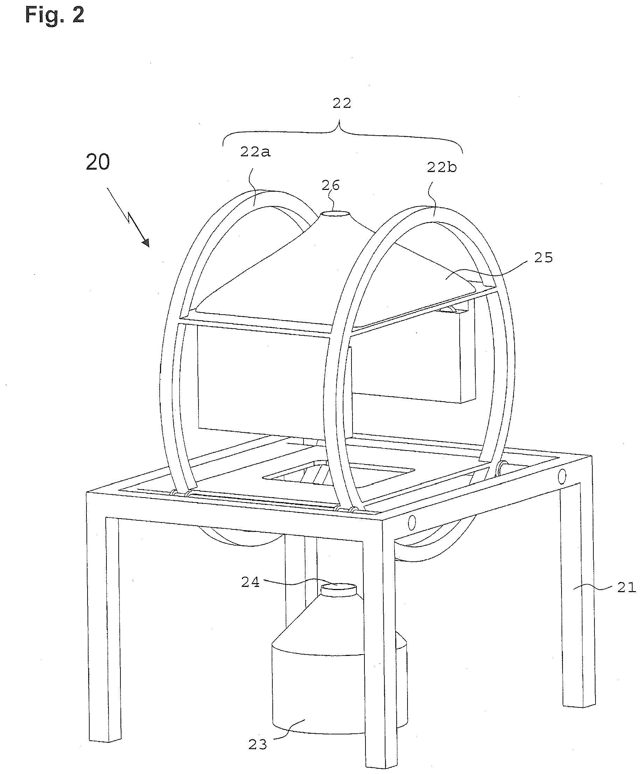

Fig. 2 ist eine schematische perspektivische Ansicht des Inneren der Auspackstation 20. Ein eventuell vorhandenes Gehäuse ist zur Vereinfachung der Darstellung weggelassen.

Die Auspackstation 20 enthält ein feststehendes Gestell 21 mit einem Drehrahmen 22. Der Drehrahmen 22 ist so an dem Gestell 21 angebracht, dass er um eine horizontal verlaufende Achse drehbar ist. In dem in der Figur dargestellten Beispiel verläuft die Drehachse durch die Mittelpunkte der beiden kreisförmigen Ringe, die den Drehrahmen 22 bilden. Der Drehrahmen 22 ist so ausgebildet, dass er in der Lage ist, einen Wechselbehälter 5 aufzunehmen. An dem Drehrahmen 22 ist ein Deckel 25 angebracht, der dazu in der Lage ist, den in den Drehrahmen 22 eingesetzten Wechselbehälter 5 zu verschließen.

Unter dem Drehrahmen 22 ist in dem Gestell 21 ein Auffangbehälter 23 angeordnet, der an seiner Oberseite eine Auffangöffnung 24 aufweist. Vorzugsweise ist die Auffangöffnung 24 verschließbar, beispielsweise durch einen (nicht gezeigten) Schieber. Der Auffangbehälter 23 kann ferner eine (ebenfalls nicht gezeigte) Ablass- oder Absaugöffnung aufweisen zum Entfernen des aufgefangenen Pulvers.

Im Betrieb wird der Wechselbehälter 5 zunächst zum Herstellen des Objekts 2 in der Prozesskammer 3 angeordnet. Der Träger 6 wird um die gewünschte Schichtdicke abgesenkt, und dann wird unter Verwendung des Beschichters 13 eine Schicht des pulverförmigen Aufbaumaterials 12 aufgetragen. Anschließend wird der Querschnitt des herzustellenden Objekts von dem Laserstrahl 15 abgetastet, so dass das pulverförmige Aufbaumaterial 12 an diesen Stellen verfestigt wird. Diese Schritte werden solange wiederholt, bis das Objekt fertiggestellt ist.

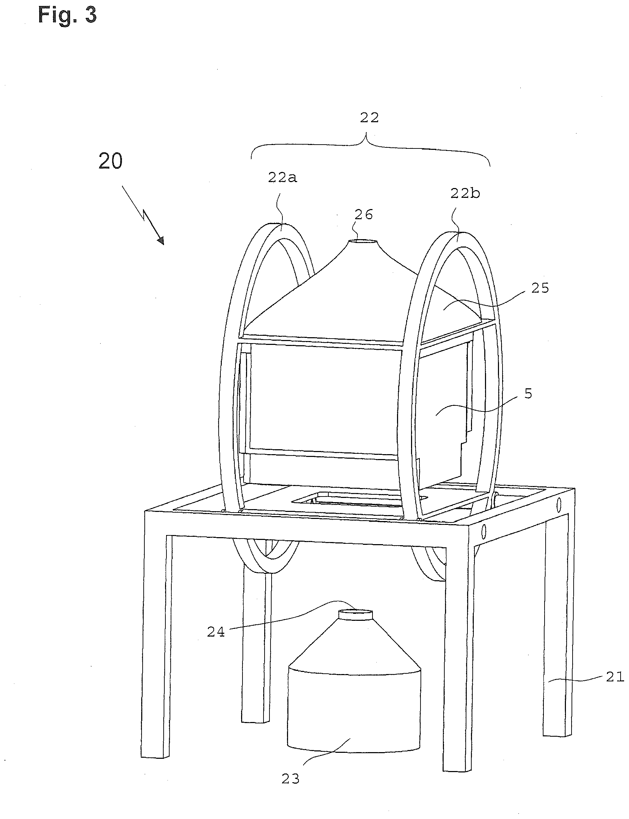

Zum Auspacken des Objekts 2 aus dem es umgebenden unverfestigt gebliebenen Pulver 9 wird der Wechselbehälter 5 in die Auspackstation 20 verbracht und in den Drehrahmen 22 eingesetzt. Fig. 3 zeigt die Auspackstation 20 in dem Zustand, in dem der Wechselbehälter 5 eingesetzt ist. Dabei schließt der Deckel 25 den Wechselbehälter 5 nach oben ab. Der Deckel 25 hat an seiner Oberseite eine Auslassöffnung 26 für das unverfestigt gebliebene Pulver 9. Diese Auslassöffnung 26 ist zunächst mit einem (in den Figuren nicht dargestellten) Schieber verschlossen.

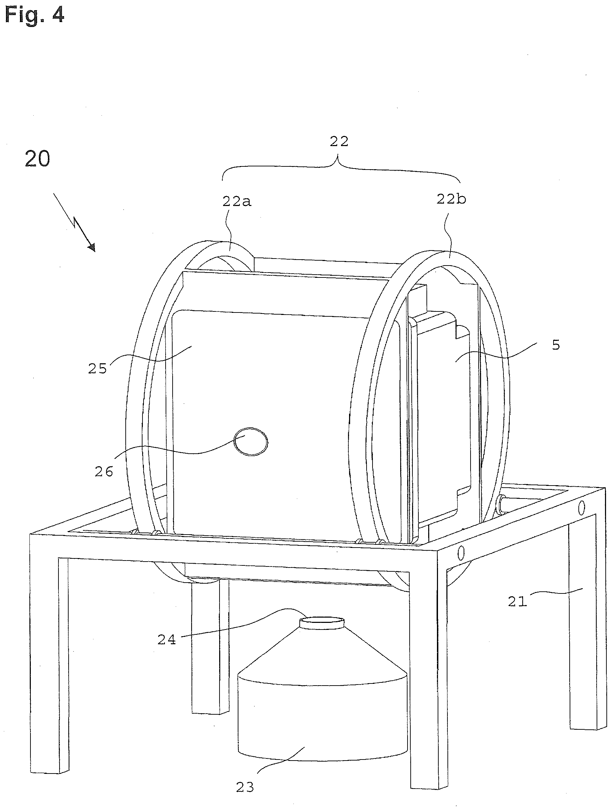

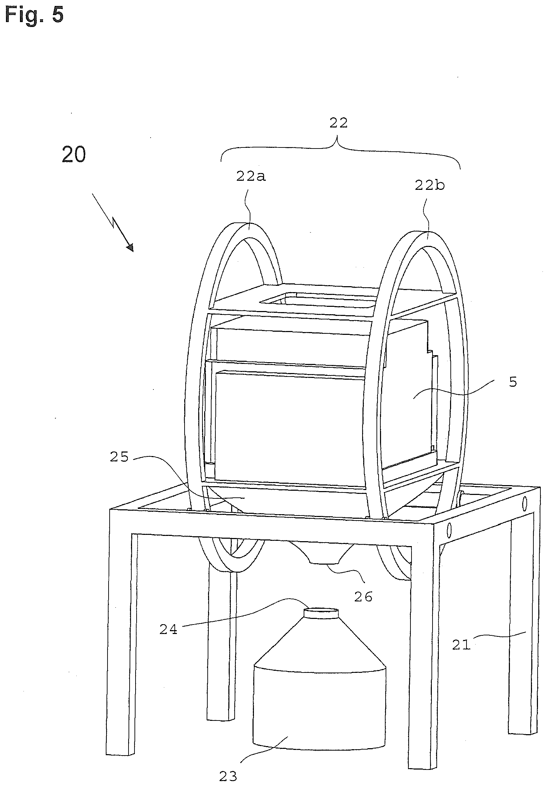

Wie in Fig. 4 dargestellt wird anschließend der Drehrahmen 22 mit dem darin aufgenommenen Wechselbehälter 5 um eine horizontale Drehachse gedreht. Bei der in Fig. 5 gezeigten Endstellung (Drehwinkel 180°) zeigt die Auslassöffnung 26 des Deckels 25 nach unten und liegt der Auffangöffnung 24 des Auffangbehälters 23 gegenüber. In dieser Position gibt der Schieber des Deckels 25 die Auslassöffnung 26 frei, und das unverfestigt gebliebene Pulver 9 kann in den darunter stehenden Auffangbehälter 23 rieseln. Das Objekt 2 ist auf der Bauplattform 7 gebildet und entweder direkt mit ihr verbunden, z.B. indem es direkt darauf gesintert wurde, oder es ist auf einer an der Bauplattform 7 befestigten Grundplatte gebildet. Es fällt daher auch bei einer Drehung um 180° nicht nach unten.

Nach dem Entleeren des Wechselbehälters 5 von unverfestigt gebliebenem Pulver 9 wird er der Auspackstation 20 entnommen, der Deckel 25 wird entfernt und das Objekt 2 wird von der Bauplattform 7 abgelöst. Damit ist das Auspacken des Objekts 2 abgeschlossen.

Um das Ablösen des Pulvers 9 von dem Objekt 2 zu unterstützen, kann eine Vibration auf das Objekt 2 übertragen werden. Diese Vibration wird von außen auf den Wechselbehälter 5 aufgebracht, vorzugsweise auf die in dem Wechselbehälter 5 angeordnete Grundplatte 6a bzw. Bauplattform 7, die das Objekt hält. Dabei wird vorzugsweise durch geeignete Dämpfungsmaßnahmen sichergestellt, dass die Vibration sich nicht zu anderen Teilen der Vorrichtung hin ausbreitet wie z.B. der Beleuchtungseinrichtung oder der Prozesskammer, in der eventuell gleichzeitig bereits ein weiteres Objekt hergestellt wird, um dessen Fertigungsgenauigkeit nicht zu beeinträchtigen.

Anstelle einer Vibration, also einer kontinuierlichen Schwingung, oder zusätzlich zu dieser kann auch ein Klopfen, also einzelne aufeinanderfolgende Stöße, auf das Objekt 2 übertragen werden.

Abhängig von den für die Herstellung des Objekts vorliegenden Geometriedaten und von verschiedenen Prozessparametern wie z.B. der Art und Korngröße des verwendeten Pulvers, der Schichtdicke, einer Dauer der Belichtung durch den Laser oder einer Temperatur des Pulvers während der Verarbeitung können die Parameter der Vibration oder des Klopfens geeignet ausgewählt und die Auspackvorrichtung 20 dementsprechend gesteuert werden. Bei der Vibration sind das beispielsweise Frequenz, Richtung, Amplitude, Dauer oder Impulsform der Schwingung, beim Klopfen beispielsweise Stärke oder Richtung der einzelnen Stöße oder ihr zeitlicher Abstand. Diese Auswahl und Steuerung kann auch computergesteuert über eine Software durchgeführt werden.

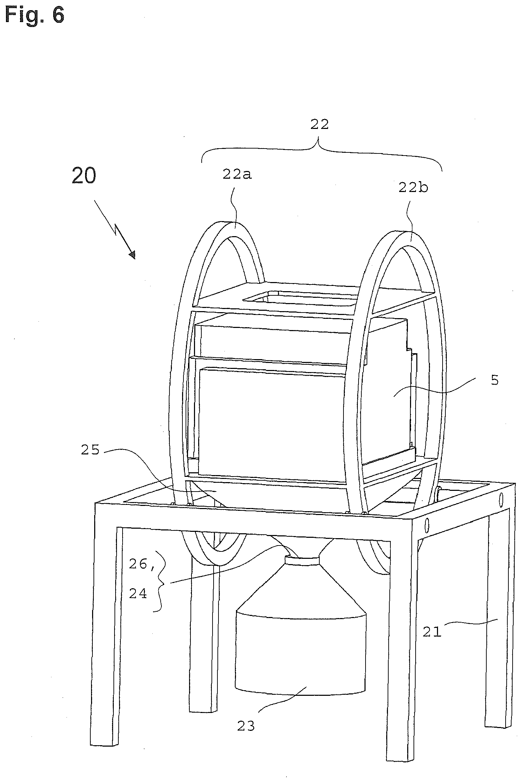

Wie in Fig. 6 gezeigt kann der Deckel 25 des Wechselbehälters an dem Deckel des Auffangbehälters 23 angedockt werden. In diesem Fall entsteht ein geschlossener, gasdichter Innenraum, der aus Wechselbehälter 5 und Auffangbehälter 23 gebildet ist und mit einem Schutzgas gefüllt sein kann, so dass das Entleeren des Wechselbehälters 5 unter Schutzgasatmosphäre durchgeführt wird. Da das Objekt 2 und das Pulver 9 beim Auspacken in der Regel noch heiß sind, können dadurch unerwünschte Reaktionen vermieden werden. Alternativ kann aber auch das gesamte Innere der Auspackstation 20 mit einem Schutzgas gefüllt sein. Wenn die Auslassöffnung 26 des Deckels 25 und/oder die Auffangöffnung 24 des Auffangbehälters 23 verschließbar ausgebildet sind, kann die Schutzgasatmosphäre auch dann in dem Wechselbehälter 5 und/oder dem Auffangbehälter 23 aufrechterhalten werden, wenn beide voneinander getrennt sind.

Statt fester Bestandteil der Auspackstation 20 zu sein, kann der Deckel 25 auch getrennt bereitgestellt sein. Ist keine Schutzgasatmosphäre erforderlich, braucht auch kein Deckel auf den Wechselbehälters 5 aufgesetzt zu werden. Das Pulver rieselt dann beim Drehen des Wechselbehälters 5 aus dessen offener Oberseite heraus. Die Auffangöffnung 24 und der Auffangbehälter 23 müssen dann entsprechend groß genug sein, das herausrieselnde Pulver auffangen zu können.

Um das Pulver restlos aus dem Wechselbehälter 5 zu entfernen, muss dieser um mindestens 90° aus der aufrechten Stellung heraus gedreht werden, vorzugsweise um mindestens 120°, in weiter bevorzugter Weise um mindestens 150° und in noch weiter bevorzugter Weise um mindestens 180°. Die aufrechte Stellung ist die Stellung des Wechselbehälters, in der die Auslassöffnung 26 nach oben zeigt und in der das Objekt 2 hergestellt wurde. Dabei verläuft die Drehachse, um die diese Drehung erfolgt, vorzugsweise horizontal. Es können auch Anordnungen verwendet werden, bei denen keinerlei Einschränkungen des Winkels gegeben sind und der Wechselbehälter beispielsweise um mehr als 360° gedreht werden kann.

Durch das beschriebene Verfahren ist es möglich, Objekte, die durch schichtweises Verfestigen von pulverförmigem Ausgangsmaterial hergestellt wurden, zuverlässig von dem es umgebenden, unverfestigt gebliebenen Pulver zu befreien. Ein eigener Antrieb zum Bewegen des Trägers, auf dem das Objekt aufgebaut wurde, ist dabei nicht erforderlich. Außerdem kann das Pulver auch aus Hohlräumen, die mit dem beschriebenen Stand der Technik nicht von Pulver befreit werden können, herausrieseln. Dadurch, dass die Drehachse bei dem beschriebenen Drehrahmen durch den Wechselbehälter hindurchläuft, kann die Auspackstation wesentlich kompakter gebaut sein als bei einer Drehachse unterhalb des Behälters.

Um das Entfernen des Pulvers aus Hohlräumen, insbesondere aus engen Kanälen zu verbessern, kann es vorteilhaft sein, den Wechselbehälter nicht um 180° zu drehen, sondern so, dass diese Kanäle möglichst senkrecht stehen, damit das Pulver gut aus den Kanälen herausrieseln kann, eventuell unterstützt durch Vibrieren. Dabei kann auch eine Drehung von mehr als 180° von Vorteil sein, z.B. bis 270°. Der bevorzugte Drehwinkel des Drehrahmens ergibt sich dabei aus dem Winkel der Kanäle in dem Objekt. Er kann beispielsweise aus den Entwurfsdaten des hergestellten Objekts bestimmt werden,. Diese Bestimmung kann auch computergestützt durch eine Software erfolgen, die dann die Drehung entsprechend steuert.

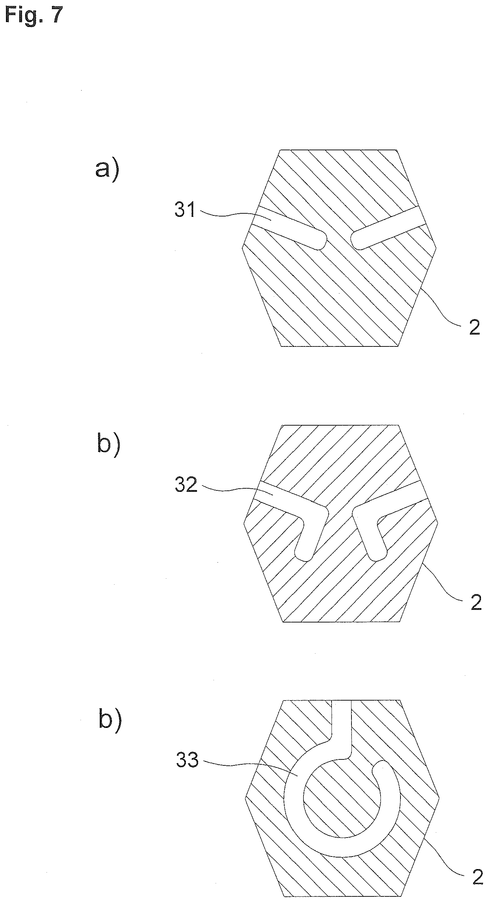

Fig. 7 zeigt schematisch Geometrien hergestellter Objekte mit Innenkanälen. In Fig. 7a) ist ein fertiggestelltes Objekt 2 dargestellt, das zwei gerade verlaufende Kanäle 31 enthält. Zunächst kann der Wechselbehälter 5 um 180° gedreht werden, um den Großteil des unverfestigten Pulvers zu entfernen. Zum Befreien der Kanäle 31 von unverfestigtem Pulver wird der Wechselbehälter 5 anschließend vorzugsweise so gedreht, dass die Kanäle jeweils senkrecht stehen. Wenn die Kanäle beispielsweise einen Winkel von 60° zu der Senkrechten haben, wird der Wechselbehälter 5 in eine Winkelstellung von 120° und 240° gebracht (=180° ± 60°). Wenn die Winkelstellungen ausreichen, das Pulver hinreichend aus dem Wechselbehälter 5 zu entfernen, kann die anfängliche Einstellung auf 180° weggelassen werden.

In Fig. 7b) ist ein fertiggestelltes Objekt 2 dargestellt, das zwei gewinkelt verlaufende Kanäle 32 enthält. Zum Entleeren dieser Kanäle reicht jeweils nicht eine Winkelstellung aus, sondern es müssen abwechselnd der innere und der äußere Schenkel des Kanals in eine senkrechte Position gebracht werden.

In Fig. 7c) ist ein fertiggestelltes Objekt 2 dargestellt, das einen gekrümmt verlaufenden Kanal 33 enthält. Zum Entleeren dieses Kanals muss eine zeitliche Abfolge von Winkelstellungen eingestellt werden, damit das Pulver auch aus dem hintersten Ende des Kanals entfernt werden kann. Diese zeitliche Abfolge kann beispielsweise aus den für die Herstellung des Objekts vorliegenden Geometriedaten ermittelt werden. Diese Ermittlung kann auch computergestützt durch eine Software erfolgen, die dann den Drehrahmen 22 so steuert, dass die Drehung des Wechselbehälters 5 mit der ermittelten zeitlichen Abfolge von Winkelstellungen durchgeführt wird.

Um die Kanäle unabhängig von ihrer Lage in dem Objekt in eine senkrechte Stellung bringen zu können, kann es vorteilhaft sein, mehr als eine Drehachse vorzusehen. Es können auch Anordnungen verwendet werden, bei den der Wechselbehälter in beliebige Richtungen gedreht werden kann.

Auch wenn die Auspackstation in der beschriebenen Ausführungsform als eigene Station außerhalb der Prozesskammer angeordnet ist, ist die vorliegende Erfindung nicht darauf eingeschränkt. Die Auspackstation kann auch innerhalb der Prozesskammer angeordnet sein. Der Drehrahmen kann auch so angeordnet sein, dass der Wechselbehälter bereits während des Herstellens des Objekts in ihn eingesetzt ist und nicht erst nach dem Herstellen des Objekts in ihn übertragen werden muss. Alle Merkmale, die oben für die getrennt angeordnete Auspackstation beschrieben sind, können dann auch in der Prozesskammer selber angeordnet sein.

Auch wenn in der beschriebenen Ausführungsform ein Wechselbehälter verwendet wird, ist die vorliegende Erfindung nicht darauf eingeschränkt. Sie lässt sich auch auf Fälle anwenden, bei denen kein Wechselbehälter vorhanden ist. In diesen Fällen kann das Pulver beispielsweise zunächst durch Absaugen oder Abblasen von dem fertiggestellten Objekt entfernt werden. Dann wird lediglich die Bauplattform, auf der das Objekt aufgebaut ist, in den Drehrahmen übertragen und gedreht, beispielsweise um Pulver aus in dem Objekt enthaltenen Öffnungen zu entfernen. Alternativ kann die Bauplattform auch hier bereits während des Herstellens des Objekts in dem Drehrahmen eingesetzt sein. Die aufrechte Stellung, aus der heraus die Bauplattform gedreht wird, ist wie bei dem Wechselrahmen die Stellung die Bauplattform, in der das Objekt hergestellt wurde.

Auch wenn in der beschriebenen Ausführungsform ein Drehrahmen zum Drehen des Wechselbehälters bzw. der Bauplattform beschrieben wurde, ist die vorliegende Erfindung nicht darauf eingeschränkt. Es kann beispielsweise auch ein Drehteller, an dem der Wechselrahmen bzw. die Bauplattform befestigt wird, oder eine beliebige andere Drehvorrichtung verwendet werden.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials durch Einwirkung von Energie angewendet werden. Der Laser kann beispielsweise ein Gas- oder Festkörperlaser, eine Laserdiode oder ein Laserdioden-Array sein. Allgemein kann jede Belichtungseinrichtung verwendet werden, mit der Energie selektiv auf eine Pulverschicht aufgebracht werden kann. Anstelle eines Lasers können beispielsweise eine andere Lichtquelle, ein Elektronenstrahl oder jede andere Energie- bzw. Strahlenquelle, die geeignet ist, das pulverförmige Aufbaumaterial zu verfestigen, verwendet werden. Auch auf das selektive Maskensintern, bei dem anstelle eines verfahrbaren Laserstrahls eine Maske und eine ausgedehnte Lichtquelle verwendet werden, oder auf das Absorptions- bzw. Inhibitionssintern kann die Erfindung angewendet werden. Insbesondere bezieht sich die Erfindung allgemein auf das Herstellen eines gesamten Objekts allein mittels schichtweisen Auftragens und selektiven Verfestigens eines pulverförmigen Aufbaumaterials, auch wenn das Verfestigen, wie z.B. beim 3D-Drucken oder Tintenstrahlverfahren, nicht durch Einbringen von Energie erfolgt.

Als Aufbaumaterial können verschiedene Arten von Pulver verwendet werden, insbesondere Metall- oder Kunststoffpulver oder gefüllte oder gemischte Pulver. Besonders vorteilhaft lässt sich das erfindungsgemäße Verfahren für Metallpulver einsetzen.

## Patentansprüche

1. Vorrichtung (1) zum Herstellen eines dreidimensionalen Objekts (2) durch schichtweises Aufbringen und selektives Verfestigen eines pulverförmigen Aufbaumaterials (12) mit
einer Prozesskammer (3) zum schichtweisen Herstellen des Objekts (2) in einem Wechselbehälter (5) und/oder auf einer Bauplattform (6a, 7) und
einer Vorrichtung (20) zum Auspacken des Objekts (2) aus dem es umgebenden unverfestigt gebliebenen Pulver (9), wobei die Vorrichtung (20) eine drehbar angeordnete Drehvorrichtung (22) enthält, die in der Lage ist, den Wechselbehälter (5) und/oder die Bauplattform (6a, 7) aufzunehmen und um einen Winkel von mindestens 90° aus der aufrechten Position heraus zu drehen.

2. Vorrichtung (1) gemäß Anspruch 1, bei der die Drehachse der Vorrichtung (20), um die die Drehvorrichtung (22) drehbar ist, um den Wechselbehälter (5) und/oder die Bauplattform (6a, 7) aus der aufrechten Position heraus zu drehen, horizontal verläuft.

3. Vorrichtung (1) gemäß Anspruch 1 oder 2, wobei die Vorrichtung (20) weiter enthält:
einen Deckel (25) zum Verschließen des Wechselbehälters (5) und/oder
einen Auffangbehälter (23) für das unverfestigt gebliebene Pulver.

4. Vorrichtung (1) gemäß einem der Ansprüche 1 bis 3, bei der die Drehachse der Vorrichtung (20), um die die Drehvorrichtung (22) drehbar ist, um den Wechselbehälter (5) aus seiner aufrechten Position heraus zu drehen, durch den zum Aufnehmen des Wechselbehälters (5) bestimmten Bereich der Drehvorrichtung (22) verläuft.

5. Vorrichtung (1) gemäß einem der Ansprüche 1 bis 4, bei der die Drehvorrichtung (22) der Vorrichtung (20) so ausgebildet ist, dass der Wechselbehälter (5) und/oder die Bauplattform (6a, 7) um mehr als eine Drehachse drehbar ist.

6. Verfahren zum Befreien eines in einem Wechselbehälter (5) und/oder auf einer Bauplattform (6a, 7) durch schichtweises Aufbringen und selektives Verfestigen eines pulverförmigen Aufbaumaterials (12) hergestellten dreidimensionalen Objekts (2) von unverfestigt gebliebenem Pulver (9), wobei das Verfahren die Schritte enthält:
Anbringen der Bauplattform (6a, 7) an einer Drehvorrichtung (22),
Drehen des Wechselbehälters (5) und/oder der Bauplattform (6a, 7) um einen Winkel von mindestens 90° aus der aufrechten Position heraus.

7. Verfahren gemäß Anspruch 6, das weiter einen Schritt des Übertragens einer Vibration und/oder eines Klopfens auf das Objekt (2) enthält.

8. Verfahren gemäß Anspruch 7, bei dem
Parameter für die Vibration und/oder das Klopfen aus Geometriedaten des dreidimensionalen Objekts (2) und/oder Prozessparametern ermittelt werden und
die Auspackvorrichtung (22) gesteuert wird, die Vibration und/oder das Klopfen mit den ermittelten Parametern durchzuführen.

9. Verfahren gemäß Anspruch 8, bei dem
die Parameter für die Vibration gewählt sind aus Frequenz und/oder Richtung und/oder Amplitude und/oder Dauer und/oder Impulsform und/oder
die Parameter für das Klopfen gewählt sind aus Stärke und/oder Richtung und/oder dem zeitlichen Abstand der einzelnen Stöße.

10. Verfahren gemäß einem der Ansprüche 6 bis 9, das
vor dem Anbringen des Wechselbehälters (5) an der Drehvorrichtung (22) das Verschließen des Wechselbehälters (5) mit einem Deckel (25) enthält, der eine verschließbare Auslassöffnung (26) aufweist,
wobei die Auslassöffnung (26) geöffnet wird, nachdem die Drehvorrichtung (22) gedreht wurde.

11. Verfahren gemäß Anspruch 10, das
vor dem Öffnen der Auslassöffnung (26) einen Schritt des Andockens der Auslassöffnung (26) des Deckels (25) an eine Auffangöffnung (24) eines Auffangbehälters (23) zum Bilden eines gasdichten Innenraums enthält.

12. Verfahren gemäß einem der Ansprüche 6 bis 11, bei dem der Wechselbehälter (5) um eine Drehachse gedreht wird, die durch den Wechselbehälter (5) hindurch verläuft.

13. Verfahren gemäß einem der Ansprüche 6 bis 12, bei dem
ein Winkel und/oder eine zeitliche Abfolge von Winkelstellungen aus Geometriedaten des dreidimensionalen Objekts (2) ermittelt wird und
die Drehvorrichtung (22) gesteuert wird, die Drehung des Wechselbehälters (5) und/oder der Bauplattform (6a, 7) mit dem ermittelten ein Winkel und/oder der ermittelten zeitlichen Abfolge von Winkelstellungen durchzuführen.

14. Verfahren zum Herstellen eines dreidimensionalen Objekts (2) durch schichtweises Aufbringen und selektives Verfestigen eines pulverförmigen Aufbaumaterials (12) mit den Schritten:
Aufbauen des Objekts (2) in einem Wechselbehälter (5) und/oder auf einer Bauplattform (6a, 7) und
Entfernen unverfestigt gebliebenen Pulvers (9) von dem Objekt (2) mit einem Verfahren gemäß einem der Ansprüche 6 bis 13.

15. Verwendung einer Vorrichtung (20) zum Auspacken eines in einem Wechselbehälter (5) und/oder auf einer Bauplattform (6a, 7) durch schichtweises Aufbringen und selektives Verfestigen eines pulverförmigen Aufbaumaterials (11) hergestellten dreidimensionalen Objekts (2) zum Auspacken des Objekts aus dem es umgebenden unverfestigt gebliebenen Pulver (9),
wobei die Vorrichtung (20) eine drehbar angeordnete Drehvorrichtung (22) enthält, die in der Lage ist, den Wechselbehälter (5) und/oder die Bauplattform (6a, 7) aufzunehmen und um einen Winkel von mindestens 90° aus der aufrechten Position heraus zu drehen und
die Bauplattform (6a, 7) an der Drehvorrichtung (22) angebracht wird.

## Claims

1. A device (1) for producing a three-dimensional object (2) by a layer-wise application and selective solidification of a construction material (12) in powder form, having
a processing chamber (3) for a layer-wise manufacturing of the object (2) in a swap container (5) and/or on a construction platform (6a, 7), and
a device (20) for unpacking the object (2) from the powder (9) surrounding the same that remained unsolidified, wherein the device (20) includes a rotary device (22) which is rotatably disposed and which is capable of receiving the swap container (5) and/or the construction platform (6a, 7) and of rotating the same by an angle of at least 90° from the upright position.

2. The device (1) as claimed in claim 1, wherein the rotation axis of the device (20), about which the rotary device (22) is rotatable in order to rotate the swap container (5) and/or the construction platform (6a, 7) from the upright position, runs horizontally.

3. The device (1) as claimed in claims 1 or 2, wherein said device (20) furthermore includes:
a lid (25) for closing the swap container (5), and/or
a collection container (23) for the powder that remained unsolidified.

4. The device (1) as claimed in one of claims 1 to 3, wherein the rotation axis of the device (20), about which the rotary device (22) is rotatable in order to rotate the swap container (5) and/or the construction platform (6a, 7) from its upright position, runs through that region of the rotary device (22) that is specified for receiving the swap container (5).

5. The device (1) as claimed in one of claims 1 to 4, wherein the rotary device (22) of the device (20) is configured such that the swap container (5) and/or the construction platform (6a, 7) are/is rotatable about more than one rotation axis.

6. A method of freeing a three-dimensional object (2) that has been manufactured in a swap container (5) and/or on a construction platform (6a, 7) by a layer-wise application and selective solidification of a construction material (12) in powder form from powder (9) that remained unsolidified, the method including the steps:
attaching the construction platform (6a, 7) to a rotary device (22),
rotating the swap container (5) and/or the construction platform (6a, 7) by an angle of at least 90° from the upright position.

7. The method as claimed in claim 6, said method furthermore including a step of transmitting a vibration and/or a knock to the object (2).

8. The method as claimed in claim 7, wherein
parameters for the vibration and/or the knocking are determined from geometry data of the three-dimensional object (2) and/or from process parameters, and
the unpacking device (22) is controlled so as to carry out the vibration and/or knocking using the determined parameters.

9. The method as claimed in claim 8, wherein
the parameters for the vibration are selected from frequency and/or direction and/or amplitude and/or duration and/or pulse form and/or
the parameters for knocking are selected from intensity and/or direction and/or temporal spacing of the individual knocks.

10. The method as claimed in one of claims 6 to 9, said method including a closing of the swap container (5) with a lid (25) that has a closable outlet opening (26) prior to the attaching of the swap container (5) to the rotary device (22),
wherein the outlet opening (26) is opened after the rotary device (22) has been rotated.

11. The method as claimed in claim 10, said method including prior to the opening of the outlet opening (26) a step of docking the outlet opening (26) of the lid (25) to a collection opening (24) of a collection container (23) so as to form a gas-tight interior space.

12. The method as claimed in one of claims 6 to 11, wherein the swap container (5) is rotated about a rotary axis which runs through the swap container (5).

13. The method as claimed in one of claims 6 to 12, wherein
an angle and/or a temporal sequence of angular settings is determined from geometry data of the three-dimensional object (2), and
the rotary device (22) is controlled so as to carry out the rotation of the swap container (5) and/or of the construction platform (6a, 7) using the determined one angle and/or the determined temporal sequence of angular settings.

14. A method of manufacturing a three-dimensional object (2) by a layer-wise application and selective solidification of a construction material (12) in powder form, the method including the steps:
constructing the object (2) in a swap container (5) and/or on a construction platform (6a, 7), and
removing powder (9) that remained unsolidified from the object (2) by a method as claimed in one of claims 6 to 13.

15. A use of a device (20) for unpacking a three-dimensional object (2) that has been manufactured in a swap container (5) and/or on a construction platform (6a, 7) by a layer-wise application and selective solidification of a construction material (12) in powder form from the powder (9) surrounding the same that remained unsolidified,
wherein the device (20) includes a rotary device (22) which is rotatably disposed and which is capable of receiving the swap container (5) and/or the construction platform (6a, 7) and of rotating the same by an angle of at least 90° from the upright position and
the construction platform (6a, 7) is attached to the rotary device (22).

## Revendications

1. Dispositif (1) pour la fabrication d'un objet tridimensionnel (2) par application en couches et solidification sélective d'un matériau de construction pulvérulent (12), avec une chambre de traitement (3) pour la fabrication de l'objet (2) en couches dans un conteneur interchangeable (5) et/ou sur une plate-forme de construction (6a, 7) et un dispositif (20) pour déballer l'objet (2) de la poudre non solidifiée (9) qui l'entoure, dans lequel le dispositif (20) comprend un dispositif de rotation (22) disposé de manière à pouvoir tourner, capable de recevoir le conteneur interchangeable (5) et/ou la plate-forme de construction (6a, 7) et de le/la faire tourner d'un angle d'au moins 90° par rapport à la position verticale.

2. Dispositif (1) selon la revendication 1, dans lequel l'axe de rotation du dispositif (20) autour duquel le dispositif de rotation (22) peut tourner afin de faire tourner le conteneur interchangeable (5) et/ou la plate-forme de construction (6a, 7) à partir de la position verticale est horizontal.

3. Dispositif (1) selon la revendication 1 ou 2, dans lequel le dispositif (20) comprend en outre: un couvercle (25) pour fermer le conteneur interchangeable (5) et/ou un conteneur de collecte (23) pour la poudre qui est restée non solidifiée.

4. Dispositif (1) selon l'une des revendications 1 à 3, dans lequel l'axe de rotation du dispositif (20) autour duquel le dispositif de rotation (22) peut tourner pour faire tourner le conteneur interchangeable (5) à partir de sa position verticale passe par la zone du dispositif de rotation (22) destinée à recevoir le conteneur interchangeable (5).

5. Dispositif (1) selon l'une des revendications 1 à 4, dans lequel le dispositif de rotation (22) du dispositif (20) est conçu de telle manière que le conteneur interchangeable (5) et/ou la plate-forme de construction (6a, 7) peut être tournée autour de plus d'un axe de rotation.

6. Procédé pour libérer un objet tridimensionnel (2) fabriqué dans un conteneur interchangeable (5) et/ou sur une plate-forme de construction (6a, 7) par application en couches et solidification sélective d'un matériau de construction pulvérulent (12) d'une poudre non solidifiée (9), le procédé comprenant les étapes: fixation de la plate-forme de construction (6a, 7) à un dispositif de rotation (22), rotation du conteneur interchangeable (5) et/ou de la plate-forme de construction (6a, 7) d'un angle d'au moins 90° par rapport à la position verticale.

7. Procédé selon la revendication 6, qui comprend en outre une étape de transmission de vibrations et/ou de tapotements à l'objet (2).

8. Procédé selon la revendication 7, dans lequel les paramètres de vibration et/ou de cognement sont déterminés à partir de données géométriques de l'objet tridimensionnel (2) et/ou de paramètres de processus et le dispositif de rotation (22) est commandé pour effectuer la vibration et/ou le cognement avec les paramètres déterminés.

9. Procédé selon la revendication 8, dans lequel les paramètres pour la vibration sont choisis parmi la fréquence et/ou la direction et/ou l'amplitude et/ou la durée et/ou la forme de l'impulsion et/ou les paramètres pour le cognement sont choisis parmi la force et/ou la direction et/ou l'intervalle de temps des chocs individuels.

10. Procédé selon l'une des revendications 6 à 9, qui comprend, avant de fixer le conteneur interchangeable (5) au dispositif de rotation (22), la fermeture du conteneur interchangeable (5) avec un couvercle (25) ayant une ouverture de sortie (26) pouvant être fermée, dans lequel l'ouverture de sortie (26) est ouverte après que le dispositif de rotation (22) a été tourné.

11. Procédé selon la revendication 10, comprenant, avant l'ouverture de l'ouverture de sortie (26), une étape d'amarrage de l'ouverture de sortie (26) du couvercle (25) à une ouverture de collecte (24) d'un conteneur de collecte (23) pour former un espace intérieur étanche aux gaz.

12. Procédé selon l'une des revendications 6 à 11, dans laquelle le conteneur interchangeable (5) est mis en rotation autour d'un axe de rotation passant par le conteneur interchangeable (5).

13. Procédé selon l'une des revendications 6 à 12, dans lequel un angle et/ou une séquence temporelle de positions angulaires est déterminée à partir de données géométriques de l'objet tridimensionnel (2) et le dispositif de rotation (22) est commandé pour effectuer la rotation du conteneur interchangeable (5) et/ou de la plate-forme de construction (6a, 7) avec l'angle déterminé et/ou la séquence temporelle de positions angulaires déterminée.

14. Procédé de fabrication d'un objet tridimensionnel (2) par application et solidification sélective d'un matériau de construction pulvérulent (12) en couches, comprenant les étapes Construire l'objet (2) dans un conteneur interchangeable (5) et/ou sur une plate-forme de construction (6a, 7) et enlever la poudre non solidifiée (9) de l'objet (2) par une méthode selon l'une des revendications 6 à 13.

15. Utilisation d'un dispositif (20) pour déballer un objet tridimensionnel (2) fabriqué dans un conteneur interchangeable (5) et/ou sur une plate-forme de construction (6a, 7) par application en couches et solidification sélective d'un matériau de construction pulvérulent (11) pour déballer l'objet de la poudre non solidifiée (9) qui est restée autour de lui, dans lequel le dispositif (20) comprend un dispositif de rotation (22) disposé de manière à pouvoir tourner, capable de recevoir le conteneur interchangeable (5) et/ou la plate-forme de construction (6a, 7) et de la faire tourner d'un angle d'au moins 90° par rapport à la position verticale et la plate-forme de construction (6a, 7) est fixée au dispositif de rotation (22).
